Europäisches Patentamt

European Patent Office

Office européen des brevets

(11) Publication number: **0 425 027 B1**

## EUROPEAN PATENT SPECIFICATION

(45) Date of publication of patent specification: **14.06.95**  (51) Int. Cl.⁶: **C08F 297/04**, C10M 143/12

(21) Application number: **90202781.2**

(22) Date of filing: **17.10.90**

(54) **Star shaped polymer, its preparation and lubricating compositions containing it.**

(30) Priority: **26.10.89 US 426642**

(43) Date of publication of application:
**02.05.91 Bulletin 91/18**

(45) Publication of the grant of the patent:
**14.06.95 Bulletin 95/24**

(84) Designated Contracting States:
**BE CH DE ES FR GB IT LI NL SE**

(56) References cited:
**EP-A- 0 025 353**
**EP-A- 0 171 225**
**EP-A- 0 314 251**
**EP-A- 0 324 992**
**CA-A- 716 645**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **Rhodes, Robert Barnett**
**11735 Normont Drive**
**Houston,**
**Texas 77070 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

EP 0 425 027 B1

**Description**

This invention relates to star shaped polymers, their preparation and lubricating compositions containing them.

As is well known, the viscosity of lubricating oils varies with temperature, and, since lubricating oils generally encounter a relatively broad temperature range during use, it is important that the oil not be too viscous (thick) at low temperatures nor too fluid (thin) at higher temperatures. In this regard, variation in the viscosity-temperature relationship of an oil is indicated by the so-called viscosity index (VI). The higher the viscosity index, the less the change in viscosity with temperature. In general, the viscosity index is a function of the oils viscosity at a given lower temperature and a given higher temperature. In the United States of America, for example, the given lower temperature and the given higher temperature for cars have varied over the years but are fixed at any given time in an ASTM test procedure (ASTM D2270). Currently, the lower temperature specified in the test is 40 ° C and the higher temperature specified in the test is 100 ° C.

Heretofore, several methods have been proposed for improving the rheological properties of lubricating oil compositions. Frequently, these methods involve the use of one or more polymeric additives. Methods of this type wherein the polymeric additive is a linear or branched-chained polymer, are taught, for example, in U.S. Patents Nos. 3,554,911; 3,668,125; 3,772,196; 3,775,329 and 3,835,053. The polymeric additives taught in these U.S. patents are, generally, hydrogenated, linear or substantially linear polymers of one or more conjugated dienes which may, optionally, also contain monomeric units of one or more monoalkenyl aromatic hydrocarbons, which are typically prepared via the ionic solution polymerization of the monomers followed by hydrogenation. A selectively hydrogenated, linear block copolymer comprising a single styrene polymer block and a single selectively hydrogenated isoprene polymer block, in accordance with U.S. Patent No. 3,772,196, is available commercially and is commonly used as a VI improver.

Method of this type wherein the polymeric additive is a star-shaped polymer are taught, for example, in U.S. Patents Nos. 4,077,893; 4,116,917; 4,141,847; 4,156,673 and 4,427,834. The polymeric additives taught in this series of patents are, generally, star-shaped (radial) polymers wherein all, or at least most of the polymer arms will be either homopolymers or copolymers of conjugated dienes or copolymers of one or more conjugated dienes and one or more monoalkenyl aromatic hydrocarbons. In certain of these polymeric additives, however, one or more arms will either be modified or different. Polymeric additives wherein all of the arms are either hydrogenated homopolymers or copolymers of one or more conjugated dienes, selectively hydrogenated copolymers of a conjugated diolefin and a monoalkenyl aromatic hydrocarbon or a mixture of such arms are described in U.S. Patents Nos. 4,116,917 and 4,156,673. Star polymers of the type disclosed in U.S. Patents Nos. 4,116,917 and 4,156,673 which are modified to incorporate functional groups imparting dispersant characteristics are taught in U.S. Patents Nos. 4,077,893 and 4,141,847. The polymeric additive disclosed in U.S. Patent No. 4,077,893 is a hydrogenated star polymer which is reacted first with an unsaturated carboxylic acid or derivative thereof and then with an alkane polyol. The polymeric additive disclosed in U.S. Patent No. 4,141,847 is a hydrogenated star-shaped polymer which is reacted first with an unsaturated carboxylic acid or derivative thereof and then with an amine. The polymeric additive taught in U.S. Patent 4,427,834 is one wherein one or more of the arms of a star-shaped polymer such as those taught in U.S. Patents Nos. 4,116,917 and 4,156,673 is, effectively, replaced with an arm prepared by polymerizing a nitrogen containing polar compound monomer. Star-shaped polymers wherein all of the arms are homopolymers of isoprene, which star-shaped polymers are within the scope of the teaching of both U.S. Patents Nos. 4,116,917 and 4,156,673, are commercially available and commonly used as VI improvers.

Recently, it was discovered that certain hydrogenated, asymmetric radial polymers are particularly effective VI improvers. This discovery is described in U.S. Patent No. 4,849,481. These hydrogenated, asymmetric radial polymers comprise a plurality of arms, some of which arms are polymers of one or more hydrogenated conjugated diolefins and others of which arms are block copolymers comprising a polymeric block containing predominantly one or more monoalkenyl aromatic hydrocarbon monomer units and a polymeric block containing predominantly one or more hydrogenated conjugated diolefin monomer units. These asymmetric radial polymers are prepared by first coupling a suitable blend of living polymers in the same manner used, generally, to prepare star-shaped polymers and then selectively hydrogenating the conjugated diolefin portions of the radial polymer.

As is also well known in the prior art, thickening efficiency of a polymeric additive is generally the principal, and sometimes the sole, consideration in its selection for use as a VI improver. Particularly, polymeric additives which significantly increase the high temperature kinematic viscosity without significantly increasing the low temperature kinematic viscosity are sought. Specifications are, of course, set for

2

both the higher and lower temperature viscosities.

Low temperature viscometric limits for multigrade oils are defined in SAE Standard SAE J300 June 1987. The cold cranking simulator (CCS) method (SAE J300 June 1987, Appendix A) is used to determine the low temperature viscosity of an oil at moderately high shear rates. The viscosity determined in this test relates to engine startability, or engine cranking, at low temperatures. The higher the CCS viscosity, the more difficult engine startability is expected to be. The TP1-MRV test method (ASTM D 4684) is used to determine the low temperature pumpability characteristics of oils. Even though an engine may start with a given oil, if an oil has a yield stress in the TP1-MRV, or its viscosity in the TR1-MRV is too high, the engine will not be able to pump the oil, and engine failure will result.

Engine oil formulators normally prepare a multigrade oil to meet SAE J300 June 1987 requirements by adding sufficient polymer VI improver, and often adjusting two or more base oil concentrations, so that the kinematic viscosity target at 100°C is achieved, and the low temperature CCS and TP1-MRV requirements are not exceeded. The formulator also includes pour point depressant, dispersant, detergents, antiwear agents, and other additives to achieve the desired level of engine protection. Since polymeric VI improvers always increase low temperature viscosity in these tests, it is advantageous to select one which provides a relatively small incremental increase in viscosity. By making such a selection, the formulator of an oil has a wider selection of base oils to choose from. For example, a polymer which provides a high low temperature viscosity response is more likely to provide a fully-formulated oil that exceeds a SAE J300 low temperature viscosity requirement when used with a preferred base oil or base oil combination. If this happens, the formulator would make an alternate base stock selection, one which may be more expensive or not readily available; alternatively, if two base oils are being used to adjust low temperature response, a greater amount of the less viscous, and more volatile, base oil must be used relative to the more desirable, more viscous and less volatile base oil. However, the selection of a polymeric VI improver that provides a relatively low viscosity response provides the formulator with more options. The formulator can be less selective in base oil choice, and he can use base oil combinations so that overall base oil viscosity is maximized and volatility is minimized.

As indicated above, the upper temperature limitation specified in ASTM D 2270 is 100°C and this upper temperature limitation in turn influenced the multigrade oil Standards specified in SAE J300 June 1987.

As is known in the prior art, polymeric VI improvers heretofore proposed are generally effective when used to produce a multigrade oil composition, at least, within the range of temperatures and viscosities currently specified in the Society of Automotive Engineers (SAE) Standard for Engine Oil Viscosity Classification (SAE J300 June 1987). With few exceptions, however, the kinematic viscosity of such oil compositions drops as the temperature increases. As a result, multigrade oil compositions containing such polymeric, VI improving, additives may well not be satisfactory if specifications are ultimately set for kinematic viscosities at temperatures above the current 100°C upper limit set in ASTM D2270. It is, of course, known that many, but not all, of the prior art polymeric VI improvers contributed significantly to the low temperature viscosity of the oil compositions, thereby yielding oil compositions having marginal cold temperature characteristics which render the oil compositions unsatisfactory for use in cold regions, particularly extremely cold regions. Also, a need may well develop for a VI improver capable of yielding satisfactory multigrade oil compositons should the upper temperature specified in ASTM D 2270 be increased.

The need, then, for an improved polymeric VI improver which will provide good low temperature viscosity characteristics as well as a good balance between thickening efficiency and low temperature viscosity characteristics while at the same time affording higher kinematic viscosities at temperatures above about 100°C is thus readily apparent.

According to the present invention there is provided a star-shaped polymer comprising a plurality of arms of a block copolymer containing a single monoalkenyl aromatic hydrocarbon block and a single conjugated diolefin block having hydrogenated conjugated diene monomer units and a poly(polyalkenyl coupling agent) nucleus, said polymer containing from 6 to 13 total arms as determined by gel permeation chromatography using monoalkenyl aromatic equivalent molecular weights, the monoalkenyl aromatic equivalent peak molecular weight of the monoalkenyl aromatic hydrocarbon polymer block being within the range from 7,000 to 80,000 and the peak molecular weight of the conjugated diolefin block being within the range from 20,000 to 105,000 with the proviso that the weight ratio of monoalkenyl armatic hydrocarbon to conjugated diolefin in the polymer be within the range from 0.05:1 to 1.5:1.

The star-shaped polymers in accordance with the present invention are selectively hydrogenated star-shaped polymeric VI improvers for inclusion in lubricating oil compositions.

3

In general, the star-shaped polymers of this invention which are useful as VI improvers may be prepared using techniques analogous to known processes such as the processes taught in U.S. Patents Nos. 3,985,830; 4,116,917; 4,156,673; 4,391,949 and 4,444,953. The invention thus also comprises a process for preparing a star-shaped polymer as defined above, comprising the following steps:

(a) preparing block copolymer arms containing a polymeric monoalkenyl aromatic hydrocarbon block comprising monomeric units of one or more monoalkenyl aromatic hydrocarbon monomers and a polymeric conjugated diolefin block comprising monomeric units of one or more hydrogenated conjugated dienes by first polymerizing the conjugated diolefin monomer or monomers in solution and in the presence of an anionic initiator containing a single alkali metal atom and then adding the monoalkenyl aromatic hydrocarbon monomer or monomers and completing the polymerization to produce a living block copolymer having alkali metal atoms at the end of a monoalkenyl aromatic hydrocarbon block;

(b) reacting the living polymer from step (a) with a polyalkenyl coupling agent to form a star-shaped polymer; and

(c) selectively hydrogenating the star-shaped polymer thus formed to form a selectively hydrogenated star-shaped polymer containing hydrogenated conjugated diolefin monomer units.

As is well known, the molecular weight of the conjugated diolefin polymer blocks can be controlled by controlling the amount of conjugated diolefin added and the amount of anionic initiator added during the preparation of the diolefin block in step (a). Similarly, the molecular weight of the monoalkenyl aromatic hydrocarbon polymer blocks (for any given number of polymer chains actually initiated) may be controlled by controlling the amount of monoalkenyl aromatic monomer added during the preparation of the monoalkenyl aromatic polymer block in step (a). In the star-shaped polymer formed via the previous process, the living polymers produced in step (a) form the arms of the star-shaped polymer extending, generally, outwardly from the poly(polyalkenyl coupling agent) nucleus and as a result of the order of polymerizing the monomers, conjugated diolefin first, monoalkenyl aromatic hydrocarbon last, the arms will be coupled with the nucleus at the monoalkenyl aromatic hydrocarbon block and a conjugated diolefin block will be at the outer end of the arm.

In general, any of the methods well known in the prior art may be used as a first step to produce the living block copolymers which are useful as arm precursors in the preparation of the star-shaped polymers of this invention; i.e., living block copolymers wherein a conjugated diolefin polymer block is prepared first and a monoalkenyl aromatic hydrocarbon polymer block prepared last using an initiator containing a single alkali metal atom such that the alkali metal is attached to the "last" monoalkenyl aromatic hydrocarbon polymer block at or near the end thereof. Suitable methods, then include, for example, those described in U.S. Patents Nos. 3,231,635; 3,265,765 and 3,322,856. Polymers of this type may conveniently be prepared by first combining one or more conjugated dienes in a suitable solvent and then polymerizing the conjugated diene or dienes in the presence of an organo metallic compound particularly an organo metallic compound containing a single alkali metal atom. Particularly preferred organo metallic compounds for use in preparing the block copolymers useful in the present invention are hydrocarbons containing a single lithium atom. Suitable hydrocarbon compounds containing a single lithium atom include unsaturated compounds such as allyllithium and methallyllithium; aromatic compounds such as phenyllithium, tolyllithiums, xylyllithiums and napthyllithiums; and alkyllithiums such as methyllithium, ethyllithium, propyllithium, butyllithium, amyllithium, hexyllithium, 2-ethylhexyllithium, and n-hexadecyllithium. Secondary-butyllithium is a most preferred initiator for use in the process of the present invention.

Suitable conjugated dienes useful in the preparation of the living and conjugated diene polymer blocks include, for example, 1,3-butadiene, isoprene, 1,3-pentadiene (piperylene), 2,3-dimethyl-1,3-butadiene, 3-butyl-1,3-octadiene, 1-phenyl-1,3-butadiene, 1,3-hexadiene, and 4-ethyl-1,3-hexadiene. 1,3-butadiene and isoprene are preferred conjugated dienes for use in preparation of the star-shaped polymer of this invention.

Suitable solvents useful in the preparation of the living conjugated diene polymer blocks include hydrocarbons such as paraffins, cycloparaffins, aromatics and alkyl-substituted aromatics containing from 4 to 10 carbon atoms per molecule. Preferred such solvents comprise benzene, toluene, cyclohexane, methylcyclohexane, n-butane, n-hexane and n-heptane.

Once polymerization of the conjugated diolefin block has been completed, the monoalkenyl aromatic hydrocarbon polymeric block may be formed by adding one or more monoalkenyl aromatic hydrocarbon monomers to the solution containing the living conjugated diolefin blocks and continuing the polymerization until substantially complete. Suitable monoalkenyl aromatic hydrocarbon monomers include aryl-substituted olefins such as styrene, various alkyl styrenes, paramethoxy styrene, vinyl naphthalene and vinyl toluene. In general, the amount of monoalkenyl aromatic hydrocarbon monomer added will be controlled such that the desired molecular weight of the monoalkenyl aromatic hydrocarbon polymer block is obtained.

In general, the living block copoylmers useful in this invention will have the general formula $(B-A)_n$-Mwherein B and A are as defined in the aforementioned U.S. Patents Nos. 3,231,635; 3,265,765 and 3,322,856, n is a number from 1 to about 15 and wherein M is a metal, particularly an alkali metal and preferably lithium. In general, and as indicated in these patents, block copolymers having the general formula $(B-A)_n$-M will be prepared by first combining one or more conjugated diolefins in a suitable solvent and thereafter polymerizing the conjugated diolefins in the presence of a suitable organo metallic compound initiator and when the polymerization of the conjugated diolefin monomers is substantially complete then adding a sufficient amount of one or more monoalkenyl aromatic hydrocarbon monomers to the solution and continuing the polymerization until substantially all of the monoalkenyl aromatic hydrocarbon monomers have been polymerized. This sequence may be repeated as desired.

In general, preparation of the living block copolymers useful in the preparation of the star-shaped polymer of this invention may be effected at a temperature within the range from -150°C to 300°C, preferably from 0 to 100°C. In general, the polymerization will be carried out in an inert atmosphere, preferably nitrogen, and may be carried out under pressure, for example, at a pressure within the range from 0.5 to 10 bars (50,000 to 100,000 Pa). The concentration of initiator in the polymerization reaction may vary over a relatively wide range but will be controlled so as to produce living block copolymers having the desired molecular weights.

The conjugated diolefin polymer blocks of the block copolymer have peak molecular weights, as determined by gel permeation chromatography (GPC), within the range from 20,000 to 105,000 and the monoalkenyl aromatic hydrocarbon polymer blocks have peak molecular weights, as determined by GPC, within the range from 7,000 to 80,000, with the proviso that the weight ratio of monoalkenyl aromatic hydrocarbon monomer units to conjugated diolefin monomer units be within the range from 0.05:1 to 1.5:1. Monoalkenyl aromatic hydrocarbon to conjugated diolefin weight ratios below about 0.05:1 offer little improvement in low temperature pumpability characteristic while weight ratios above about 1.5:1 no longer offer any real advantage. With respect to monoalkenyl aromatic hydrocarbon content, it has been discovered that a weight ratio of monoalkenyl aromatic hydrocarbon to conjugated diolefin about 0.05:1 is at least approximately sufficient to render the block copolymer a solid not having "cold flow" at ambient temperature. This, the, offers a tremendous advantage in processing and handling, particularly since this makes the polymer cyclone processable.

In the next step of the preparation of the star-shaped polymer of this invention and after a living polymer is prepared, the living block copolymers will be reacted with a polyalkenyl coupling agent. Polyalkenyl coupling agents capable of forming star-shaped polymers are, of course, well known in the prior art and several are disclosed in U.S. Patents Nos. 3,985,830; 4,391,949 and 4,444,953; Canadian Patent No. 716,645 and British Patent No. 1,025,295. In general, suitable polyalkenyl coupling agents contain at least two non-conjugated alkenyl groups. The non-conjugated alkenyl groups are usually attached to the same or a different electron-withdrawing group such as an aromatic nucleus. Suitable polyalkenyl coupling agents have the property that at least two of the alkenyl groups are capable of independent reaction with different living polymers and in this respect are different from conjugated dienes. In preparing the star-shaped polymers of this invention, pure or technical grade polyalkenyl coupling agents may be used. Suitable polyalkenyl coupling agents may be aliphatic, aromatic or heterocyclic. Examples of suitable aliphatic polyalkenyl coupling agents include the polyvinyl and polyallyl acetylenes, diacetylenes, phosphates, and phosphites and dimethacrylates such as ethylene dimethacrylate. Examples of suitable heterocyclic polyalkenyl coupling agents include divinyl pyridine and divinylthiophene. Suitable aromatic alkenyl coupling agents, which are preferred in the present invention, include polyvinyl benzene, polyvinyl toluene, polyvinyl xylene, polyvinyl anthracene, polyvinyl naphthalene, and polyvinyl durene. Suitable polyvinyl groups include divinyl, trivinyl and tetravinyl. As is well known, the polyalkenyl coupling agents may be used in admixture with small amounts of added amonomers such as styrene or alkylated styrene which will increase the size of the nucleus.

The star-shaped polymers of this invention may typically prepared by adding the polyalkenyl coupling agent to the living polymer solution after the polymerization of the monomers is substantially complete; i.e., the polyalkenyl coupling agent will be added only after substantially all of the monomer present during the preparation of the living polymer has been incorporated into the living polymer. The amount of polyalkenyl coupling agent added may vary between wide limnits but preferably at least 0.5 moles per mole of living polymer will be used. Conveniently, from about 0.5 to about 15 moles of polyalkenyl coupling agent will be added per mole of living polymer. Preferably from about 1.5 to about 5 moles of polyalkenyl coupling agent will be added per mole of living polymer. In general, the amount added will be sufficient to incorporate at least 80 to 85 wt% of the living polymer into the star-shaped polymer. As is well known, addition of the polyalkenyl coupling agent may be made in a plurality of stages.

In general, formation of the star-shaped polymer will be completed in the same solvent or solvents as was used to form the living polymers. Reaction of the living polymers with the polyalkenyl coupling agent may conveniently be accomplished at a temperature within the range from 0 to 150°C, preferably from 20 to 120°C. The formation of the star-shaped polymer may conveniently be accomplished in an inert atmosphere, preferably nitrogen, at a pressure within the range from 0.5 to 10 bars (50,000 to 100,000 Pa).

The star-shaped polymers of the present invention may be visualized as having a dense center or nucleus of crosslinked poly(polyalkenyl coupling agent) and a number of arms extending outwardly therefrom. The number of arms in the star-shaped polymer may vary considerably, but typically ranges from 6 to 13, preferably from 7 to 9, as determined by gel permeation chromatography (GPC) using monoalkenyl aromatic equivalent molecular weights, the monoalkenyl aromatic scale actually used being that best suited for the aromatic monomer contained in the polymer. The star-shaped polymers of this invention may be represented by the general formula $[(B-A)_n]_y$-X wherein A, B and n are as previously defined, y is a number indicating the average number of arms in the radial block copolymer a value from 6 to 13, when determined as previously indicated and X is the poly(polyalkenyl coupling agent) nucleus. Preferably, n is 1 and X is a poly(polyvinyl aromatic coupling agent) nucleus. Most preferably, X is a poly-(divinyl benzene) nucleus. As indicated above, the nucleus X is, generally, crosslinked.

The star-shaped polymers produced via the method described above will contain metal atoms, particularly alkali metal atoms, preferably lithium atoms, in the nucleus thereof and additional arms may be incorporated into the star-shaped polymer by adding one or more monomers to the star-shaped polymer after it is formed. The monomers may be the same as or different from those used in the initial preparation of the arms. To the extent that the monomer or monomers added are different, the arms would be different. Moreover, the addition of monomer at this point could be controlled such that the additional arms thus produced would be block copolymers. Any additional polymerization would, of course, be completed at substantially the same conditions as were initially used in the preparation of the various living polymers ultimately incorporated as arms into the star polymer. As a practical matter, however, there would be no advantage to increasing the number of arms in the star polymer via this technique. This is particularly true since additional arms of the same or a different type could have been incorporated directly. To the extent that such further incorporation is not necessary or desirable, then, the metal sites may be deactivated by adding water, an alcohol, such as methanol, ethanol, isopropanol or 2-ethylhexanol or a carboxylic acid such as formic acid or acetic acid. Other compounds are, of course, known in the prior art to deactivate the active or living metal atom sites and any of these known compounds may also be used. Alternatively, the star polymer may simply be hydrogenated to deactivate the metal sites and since hydrogenation is an essential step in the preparation of the desired hydrogenated star-shaped polymers of this invention, hydrogenation is the preferred method to effect deactivation in the present invention.

In general, the star-shaped polymers prepared by combining the mixture of living polymers with a polyalkenyl coupling agent may be hydrogenated using any of the techniques known in the prior art to be suitable for such hydrogenation. In general, the hydrogenation conditions employed will be sufficient to ensure that at least 95% and preferably at least 98% of the original ethylenic unsaturation is hydrogenated. The hydrogenation conditions also will be selected so as to ensure that less than 10% and preferably less than 5% of the aromatic unsaturation is hydrogenated.

As indicated above, any of the techniques known in the prior art to selectively hydrogenate the olefinic unsaturation may be used to hydrogenate the star-shaped polymer of this invention. In general, these techniques involve the use of a suitable catalyst particularly a catalyst or catalyst precursor comprising a Group VI or Group VIII metal atom. Suitable catalysts are described in U.K. Patent Specification No. 1,030,306. A particularly preferred method for selectively hydrogenating the star-shaped polymers of this invention is described in U.S. Patent No. 3,700,633. In the process taught in U.S. Patent No. 3,700,633, hydrogenation of the polymer is accomplished in the same solvent as was used during the polymerization with a catalyst comprising the reaction product of an aluminium alkyl and a nickel or cobalt carboxylate or alkoxide. In general, hydrogenation is accomplished at a temperature within the range from 25°C to 175°C at a hydrogen partial pressure below 5000 psig ($34.5 \times 10^6$ Pa), and usually within the range from 250 to 1500 psig ($1.72 \times 10^6$ to $10.3 \times 10^6$ Pa). In generally, contacting times within the range from 5 minutes to 8 hours will be sufficient to permit the desired degree of hydrogenation. The selectively hydrogenated star-shaped polymer may be recovered as a crumb using known techniques or used directly as a solution.

The selectively hydrogenated star-shaped polymers of this invention may be added in a minor proportion to a variety of oils including lubricating and fuel oils to produce oil compositions, particularly lubricating and fuel oil compositions, generally having improved viscosity index characteristics. For examples the selectively hydrogenated star-shaped polymers may be added to oils such as middle distillate fuels, synthetic and natural lubricating oils, crude oils and industrial oils. In general, the concentration of the

6

selectively hydrogenated star-shaped polymer in such oils may vary between wide limits with amounts within the range from 0.05 to 15wt% polymer based in polymer plus total oil being most common. Concentrations within the range from 0.1 to 5 wt% polymer based on polymer plus total oil are preferred and concentrations within the range from 0.4 to 2.5 wt% polymer based on polymer plus total oil are most preferred, all percentages being based on combined polymer plus oil. Lubricating oil compositions prepared with the selectively hydrogenated star-shaped polymers of this invention may also contain other additives such as anti-corrosive additives, antioxidants, detergents, pour point depressants, one or more additional VI improvers. Typical other additives which are useful in the lubricating oil composition of this invention are mentioned, for example, in U.S. Patents Nos. 3,772,196 and 3,835,083.

In a preferred embodiment of the present invention and as indicated above, the star-shaped polymers comprise, on average, from 7 to 10 diblock copolymer segments (arms), as determined by gel permeation chromotography (GPC) using the appropriate monoalkenyl aromatic equivalent molecular weights. Each diblock copolymer segment (arm) will comprise a single conjugated diolefin polymer block and a single monoalkenyl aromatic hydrocarbon polymer block and will be connected to the nucleus of the star-shaped polymer at or through the monoalkenyl aromatic hydrocarbon polymer block. The conjugated diolefin block of the block copolymer will have a peak molecular weight as determined by GPC on an appropriate scale within the range from 20,000 to 105,000 (or at least 90,000) and the monoalkenyl aromatic hydrocarbon block will have a weight average molecular weight within the range from 7,000 to 80,000 with the proviso that the weight ratio of monoalkenyl aromatic hydrocarbon to conjugated diolefin be within the range from 0.1:1 to 1.1:1 (or to at least 0.8:1). In a preferred embodiment of this invention, the block copolymer will be selectively hydrogenated so as to saturate at least 98% of the ethylenic unsaturation initially contained in the polymer. In the preferred embodiment, divinyl benzene will be used as the coupling agent for the star-shaped polymer. In a preferred composition embodiment, the preferred radial polymer will be used as a VI improver in a multigrade, automotive lubricating oil at a concentration within the range from 0.1 to 5.0 wt% polymer, most preferably 0.4 to 2.5% polymer, based on polymer plus total oil. In a most preferred embodiment of the present invention, a star-shaped polymer wherein the block copolymer arms comprise styrene in the monoalkenyl aromatic hydrocarbon block and isoprene in the conjugated diene block will be used and the number of arms in the polymer will be determined using polystyrene equivalent molecular weights. Also in a more preferred embodiment, the molecular weight of the styrene polymer block will be within the range from 8,000 to 80,000 (preferably 25,000 to 50,000) while the molecular weight of the isoprene polymer block will be within the range from 55,000 to 105,000 and the weight ratio of styrene will be within the range from 0.1:1 to 1.1:1 (preferably 0.3:1 to 0.8:1, more preferably 0.35:1 to 0.6:1).

The present invention will be further understood from the following illustrative examples.

Example 1

In this example, a hydrogenated star-shaped polymer comprising block copolymer arms containing a single block of styrene and a single block of hydrogenated isoprene was prepared. In the first step of the preparation, isoprene polymer blocks were prepared by first polymerizing a sufficient amount of isoprene in cyclohexane and in the presence of a sufficient amount of butyllithium to produce isoprene polymer blocks having a peak molecular weight of 59,800 determined as a true molecular weight. After polymerization of the isoprene was substantially completed, a sufficient amount of styrene was added to produce a styrene polymer block having a peak molecular weight of the block copolymer using relative compositions and appropriate factors as required, of 35,900 and the polymerization continued until substantially all of the styrene had polymerized. The "living" isoprene/styrene block copolymer solution was then cooled and contacted with a sufficient amount of a 55 wt% solution of divinyl benzene in ethylvinyl benzene to produce the desired radial polymer. The coupling reaction was allowed to proceed for one hour after which the lithium sites remaining in the living star-shaped polymer were deactivated by adding methanol. It was determined that more than 90% of the living polymers had been incorporated into the star-shaped polymer. The star-shaped polymer was next hydrogenated so as to saturate at least 98% of the ethylenic unsaturation originally contained in the star-shaped polymer in the presence of a catalyst prepared by combining Ni (octoate)$_2$ and Al (Et)$_3$ in cyclohexane.

Example 2

In this example, a hydrogenated star-shaped polymer was prepared using the procedure summarized in Example 1 except that the amount of isoprene, secondary butyllithium and styrene was varied so as to produce a star-shaped polymer wherein the peak molecular weight of the styrene blocks was 66,400 and the peak molecular weight of the isoprene blocks was 63,200 as determined by GPC in the manner summarized in Example 1.

### Example 3

In this example, a hydrogenated star-shaped polymer containing arms of a isoprene/styrene block copolymer was prepared using the procedure summarized in Example 1 except that the amount of isoprene, secondary butyllithium and styrene was varied so as to produce a star-shaped polymer wherein the peak molecular weight of the styrene polymer blocks was 26,200 and the peak molecular weight of the isoprene blocks 68,400 as determined by GPC in the manner summarized in Example 1.

### Example 4

In this example, a hydrogenated star-shaped polymer containing arms of a isoprene/styrene block copolymer was prepared using the procedure summarized in Example 1 except that the amount of isoprene, secondary butyllithium and styrene was varied so as to produce a star-shaped polymer wherein the peak molecular weight of the styrene polymer blocks was 12,200 and the peak molecular weight of the isoprene blocks 71,100 as determined by GPC in the manner summarized in Example 1.

### Example 5

In this example, a hydrogenated star-shaped polymer containing arms of a isoprene/styrene block copolymer was prepared using the procedure summarized in Example 1 except that the amount of isoprene, secondary butyllithium and styrene was varied so as to produce a star-shaped polymer wherein the peak molecular weight of the styrene polymer blocks was 76,500 and the peak molecular weight of the isoprene blocks 94,100 as determined by GPC in the manner summarized in Example 1.

### Example 6

In this example, a hydrogenated star-shaped polymer containing arms of a isoprene/styrene block copolymer was prepared using the procedure summarized in Example I except that the amount of isoprene, secondary butyllithium and stryrene was varied so as to produce a star-shaped polymer wherein the peak molecular weight of the styrene polymer blocks was 41,400 and the peak molecular weight of the isoprene blocks 100,100 as determined by GPC in the manner summarized in Example 1.

### Examples 7-16

In these examples portions of the hydrogenated star-shaped polymers produced in Examples 1-6 as well as four commercially available VI improvers were used as VI improvers in a 10W-40 multigrade lubricating oil composition. The four commercially available VI improvers were "Shellvis 200" (trade mark) and "Shellvis 250" (trade mark) (both star-shaped polymers having isoprene homopolymer arms) and "Shellvis 40" (trade mark) and "Shellvis 50" (trade mark) (both linear diblock copolymer arms). All four of the commercial VI improvers are available from Shell Chemical Company, USA. The base stock used in the preparation of the multigrade lubricating oil composition was a blend of an "HVI 100N" oil and an "HVI 250N" oil. "HVI 100N" oil is the base oil having a kinematic viscosity and is also the more volatile oil. The amount of "HVI 250N" oil was varied so as to provide a lubricating oil composition having a target viscosity within the range from 32 to 35 poise (3.2 to 3.5 Pa.s) as measured in the cold cranking simulator at -20°C. The multigrade lubricating oil compositions prepared in these examples also contained 7.75 wt% of a commercially available additive package ("Lubrizol 7573") and 0.3 wt% "Acryloid 160" (trade mark). The kinematic viscosities at 100°C and 150°C, the viscosity index, the cold cranking simulator (CCS) viscosity at -20°C, the engine oil pumpability at -25°C using the TP1 mini-rotary viscometer (MRV) method according to ASTM D4684; the high temperature high shear rate (HTHSR) viscosity at 150°C at $1 \times 10^6$ seconds$^{-1}$ using the tapered bearing simulator (TBS) according to ASTM D4683 and the mechanical shear stability using the so-called diesel injector rig test according to ASTM D3945 were determined for each lubricating oil composition. The VI improver actually used, the amount thereof added to the oil composition, the percent of "HVI 250N" oil used in the lubricating oil composition and all other results are summarized in Table I below:

TABLE I

| Ex. No. | VI Improver | %wt | Styrene:Isoprene Molecular Wt. Ratio | %HVI 250 N | Kinematic Viscosity, cst (x10⁶ m²/s) 100°C | 150°C | VI | CCS, cP (x10⁻³ Pa.s) -20°C | TP-1 MRV, cP (x10⁻³ Pa.s) -25°C | TBS, cP (x10⁻³ Pa.s) 150°C | Shear Stability Test, %Vis Loss |
|---|---|---|---|---|---|---|---|---|---|---|---|
| 7 | Polymer of Example 1 | 1.31 | 0.60 | 30 | 14.3 | 6.41 | 161 | 3304 | 17,000 | 3.62 | 10.5 |
| 8 | Polymer of Example 2 | 1.63 | 1.01 | 26 | 13.9 | 6.16 | 164 | 3132 | 15,400 | 3.38 | 8.1 |
| 9 | Polymer of Example 3 | 0.96 | 0.38 | 33 | 14.2 | 6.22 | 158 | 3369 | 16,900 | 3.45 | 28.7 |
| 10 | Polymer of Example 4 | 0.82 | 0.17 | 31.5 | 13.7 | 5.80 | 159 | 3238 | 19,700 | 3.31 | 32.0 |
| 11 | Polymer of Example 5 | 1.10 | 0.81 | 32 | 14.1 | -- | 165 | 3248 | 16,500 | 3.08 | 28.9 |
| 12 | Polymer of Example 6 | 0.78 | 0.41 | 35 | 14.1 | 5.94 | 156 | 3491 | 18,600 | 3.22 | 36.8 |
| 13 | "Shellvis 40" | 0.78 | -- | 31 | 14.0 | 4.42 | 160 | 3250 | 18,000 | 3.10 | 37.5 |
| 14 | "Shellvis 50" | 1.26 | -- | 30 | 14.0 | -- | 160 | 2960 | 18,000 | 3.22 | 8.8 |
| 15 | "Shellvis 200" | 1.37 | 0 | 30 | 14.1 | -- | 160 | 3280 | 20,900 | 3.77 | 2.4 |
| 16 | "Shellvis 250" | 1.21 | 0 | 25 | 14.0 | 5.78 | 160 | 3200 | 20,600 | 3.54 | 4.6 |

From the data summarized in Table I, it is apparent that the radial block copolymers of this invention (Examples 7-12), generally contribute less to the cold cracking simulator viscosity since, generally, more "HVI 250N" oil could be used and still maintain a viscosity below 3500. Also, although many of the oils containing radial block copolymers contained more "HVI 250N" the TP1-MRV viscosities were still equivalent to or lower than those with oils containing commercially available VI improvers. Oils containing the VI improvers of this invention also have higher kinematic viscosities at 150°C than do those containing

9

the commercially available VI improvers (cf. Examples 7-12; 13 and 16).

Examples 17-24

In these examples other portions of the hydrogenated star-shaped polymers produced in Examples 1-6 as well as two commercially available star-shaped polymeric VI improvers having isoprene homopolymer arms were used as VI improvers in a 10W-40 multigrade lubricating oil composition. The two commercially available VI improvers were "Shellvis 200" and "Shellvis 250". Both of the commercial VI improvers are available from Shell Chemical Company, USA. The base stock used in the preparation of the multigrade lubricating oil composition was an "HVI 100N" oil available from a first source. The multigrade lubricating oil compositions prepared in these examples also contained 7.75 wt% of a commercially available additive package ("Lubrizol 7573") and 0.3 wt% "Acryloid 160". The kinematic viscosities at 40°C, 100°C and 150°C, the viscosity index, the cold cranking simulator (CCS) viscosity at -20°C and the engine oil pumpability at -25°C and -30°C using the mini-rotary viscometer (TP1-MRV) according to ASTM D4684 were determined for each lubricating oil composition. The VI improver actually used, the amount thereof added to the oil composition and all other results are summarized in Table II below:

TABLE II

| Ex. No. | VI Improver | %wt | Styrene: Isoprene Wt. Ratio | Kinematic Viscosity, cst (x $10^{-6}$ m$^2$/s) | | | VI | CCS, cP (x$10^{-3}$ Pa.s) | TP-1 MRV, cP (x$10^{-3}$ Pa.s) | |
| --- | --- | --- | --- | --- | --- | --- | --- | --- | --- | --- |
| | | | | 40°C | 100°C | 150°C | | -20°C | -25°C | -30°C |
| 17 | Polymer of Example 1 | 1.38 | 0.60 | 82.11 | 14.01 | 6.30 | 177 | 1890 | 12,300 | 32,500 |
| 18 | Polymer of Example 2 | 1.86 | 1.01 | 81.19 | 14.04 | 6.45 | 179 | 1980 | 12,000 | 32,800 |
| 19 | Polymer of Example 3 | 1.11 | 0.38 | 82.71 | 14.00 | 6.26 | 175 | 1900 | 12,100 | 29,200 |
| 20 | Polymer of Example 4 | 1.00 | 0.17 | 81.52 | 13.91 | 6.03 | 176 | 1890 | 16,300 | 32,800 |
| 21 | Polymer of Example 5 | 1.27 | 0.81 | 78.97 | 14.02 | 6.37 | 184 | 1900 | 10,000 | 26,100 |
| 22 | Polymer of Example 6 | 0.91 | 0.41 | 76.61 | 13.19 | -- | 175 | 1890 | 9,500 | 32,200 |
| 23 | "Shellvis 200" | 1.64 | 0 | 83.36 | 13.84 | -- | 171 | 2040 | 13,600 | 48,300 |
| 24 | "Shellvis 250" | 1.28 | 0 | 84.34 | 13.97 | -- | 172 | 1970 | 13,000 | 45,600 |

As will be apparent from the data summarized in Table II, the VI improvers of this invention (Examples Nos. 17-22), with the exception of Example 20 at 25°C, which involved the use of a relatively high molecular weight ratio, resulted in oil compositions having significantly lower TP-1 MRV viscosities at both -25°C and -30°C than did the commercially available star-shaped polymers (Examples 23 and 24). The VI improvers of this invention also resulted in oil compositions generally having lower cold cranking simulator

11

viscosities at -20°C and higher kinematic viscosities at 150°C than did the oil compositions containing the commercially available star-shaped polymers. As will also be apparent from the data summarized in Table II, the kinematic viscosity at 150°C, generally increases with increasing styrene content in the diblock copolymer arms of the star-shaped polymer.

Examples 25-31

In these examples, still other portions of the hydrogenated star-shaped polymers produced in Examples 1-6 as well as one commercially available star-shaped polymeric VI improver having isoprene homopolymer arms were used as VI improvers in a 10W-40 multigrade lubricating oil composition. The commercially available VI improver was "Shellvis 200". The commercial VI improver is available from Shell Chemical Company, USA. The base stock used in the preparation of the multigrade lubricating oil composition was an "HVI 100N" oil from a different source than that used in Examples 17-24. The multigrade lubricating oil compositions prepared in these examples contained an experimental SG type dispersant-inhibitor additive package. The kinematic viscosities at 40°C, 100°C and 150°C, the viscosity index, the cold cranking simulator (CCS) viscosity at -25°C, the engine oil pumpability at -25°C and -30°C using the mini-rotary viscometer (MRV) according to ASTM D4684 and the high temperature high shear rate (HTHSR) viscosity at 150°C at $1 \times 10^6$ seconds$^{-1}$ using the tapered bearing simulator (TBS) according to ASTM D4683 were determined for each lubricating oil composition. The VI improver actually used, the amount thereof added to the oil composition and all other results are summarized in Table III below:

TABLE III

| Ex. No. | VI Improver | %wt | Styrene: Isoprene Wt. Ratio | Kinematic Viscosity cst ($\times 10^{-6}$ m$^2$/s) | | | VI | CCS, cP ($\times 10^{-3}$ Pa.s) | TP-1 MRV, cP ($\times 10^{-3}$ Pa.s) | | TBS, cP ($\times 10^{-3}$ Pa.s) |
|---|---|---|---|---|---|---|---|---|---|---|---|
| | | | | 40°C | 100°C | 150°C | | -20°C | -25°C | -30°C | 150°C |
| 25 | Polymer of Example 1 | 1.41 | 0.60 | 82.79 | 13.99 | 6.38 | 175 | 3378 | 9,100 | 26,800 | 3.33 |
| 26 | Polymer of Example 2 | 1.82 | 1.01 | 82.77 | 14.12 | 6.48 | 177 | 3517 | 8,700 | 25,100 | 3.17 |
| 27 | Polymer of Example 3 | 1.16 | 0.38 | 83.76 | 13.92 | 6.25 | 171 | 3261 | 9,200 | 27,900 | 3.26 |
| 28 | Polymer of Example 4 | 1.01 | 0.17 | 83.42 | 14.07 | 6.13 | 175 | 3351 | 9,400 | 28,400 | 3.15 |
| 29 | Polymer of Example 5 | 1.31 | 0.81 | 84.37 | 13.94 | 6.50 | 170 | 3405 | 8,400 | 25,900 | 2.88 |
| 30 | Polymer of Example 6 | 0.95 | 0.41 | 83.66 | 13.96 | 6.13 | 172 | 3261 | 8,000 | 26,500 | 2.92 |
| 31 | "Shellvis 200" | 1.45 | 0 | 85.73 | 13.99 | 6.10 | 166 | 3685 | 11,400 | 33,400 | 3.59 |

As will be apparent from the data summarized in Table III, the VI improvers of this invention (Example Nos. 25-30) resulted in oil compositions having significantly lower TP-1 MRV viscosities at both -25°C and -30°C than did the commercially available star-shaped polymer (Example 31). The VI improvers of this invention also resulted in oil compositions generally having lower cold cranking simulator viscosities at 25°C and higher kinematic viscosities at 150°C than did the oil composition containing the commercially available star-shaped polymer. As will also be apparent from the data summarized in the preceding Table, the 150°C kinmeatic viscosity of the oil compositions tends to increase with increasing styrene content in the diblock copolymer arms of the star-shaped polymer.

Examples 32-35

In these Examples still other portions of the polymers prepared in Examples 1, 3 and 6 were used as VI improvers in 10W-40 multigrade lubricating oils. The oils were prepared with blends of "HVI 100N" and "HVI 250N" in the same manner as is summarized in Examples 7-16. After preparation, the oil compositions were subjected to a modified CLR L-38 engine test to determine the shear stability index (SSI), or polymer derived viscosity loss, after exposure to test conditions. In the modified procedure, Babbitt bearings are used and the test procedure is stopped after 10 hours. As is well known, the SSI is calculated as follows:

$$SS1 = \frac{Vn-VU}{Vn-Vb} \; X \; 100$$

wherein:

Vn = the new oil viscosity;

Vu = the used oil viscosity; and

Vb = the viscosity of the oil without polymer

The multigrade oil compositions tested in this Example also contained 7.75 wt% "Lubrizol 7573" and 0.3 wt% "Acyloid 160". The results actually obtained in the tests of this Example are summarized in the following Table IV. For convenience, these results are compared with 10W-40 oil such as that of Example 13 prepared with a commercially available VI improver.

TABLE IV

| Example No. | VI Improver Used | Wt% VI Improver in Oil | Kinematic Viscosity 100°C, cSt (x $10^{-6}$ m$^2$/s) | | SSI |
|---|---|---|---|---|---|
| | | | New | Used (10 Hours) | |
| 32 | Polymer of Example No. 1 | 1.29 | 13.76 | 14.22 | -6.1 |
| 33 | Polymer of Example No. 3 | 0.95 | 14.13 | 13.06 | 13.8 |
| 34 | Polymer of Example No. 6 | 0.85 | 14.70 | 12.87 | 22.1 |
| 35 | Polymer of Example No. 13 | 0.82 | 14.06 | 12.57 | 19.9 |

As will be apparent from the data summarized in Table IV, one oil composition of this invention responded better in this test that would have been expected from the shear stability test (ASTM D3945) results (cf. Example 32 with Example 7). As is well known, commercial VI improvers normally provide SSI values between 0 and 35, although lower (negative) values would be equally useful. It follows, then, that the polymers of Examples 32-35 are suitable for use as commercial VI improvers. The increase in the kinematic viscosity of the oil of Example 32 was, of course, unexpected but the viscosity remained well within the

15

useful range.

Example 36-38

In this Example, three multigrade automotive lubricating oils were prepared using techniques identical to those in Examples 7-12 and the kinematic viscosities of the oils then determined at several temperatures ranging from 40°C to 150°C. One of the multigrade oil compositions contained 1.3wt% of the polymer prepared in Example 6, a second contained 1.7 wt% "Shellvis 50" (trade mark) and the third 1.9 wt% "Shellvis 250" (trade mark) as VI improvers. The results obtained with each oil composition are summarized in the following Table V which lists the Example No.; the VI improver used; and the kinematic viscosity at the centrigrade temperature at which it was determined.

# EP 0 425 027 B1

## TABLE V

| Example No. | VI Improver | Kinematic Viscosity, C.St. (x 10⁻⁶ m²/s) | | | | | | | | | | |
|---|---|---|---|---|---|---|---|---|---|---|---|---|
| | | 40°C | 60°C | 80°C | 100°C | 110°C | 120°C | 130°C | 140°C | 150°C |
| 36 | Polymer of 6 | 100.5 | 48.4 | – | 18.3 | 15.6 | 13.5 | 11.9 | 10.2 | 8.8 |
| 37 | "Shellvis 50" | 112.5 | 53.6 | 30.4 | 18.6 | 14.8 | 11.4 | 8.3 | 5.9 | 4.8 |
| 38 | "Shellvis 250" | 118.6 | 45.8 | 24.6 | 18.7 | 15.3 | 12.8 | 10.8 | 9.2 | 8.0 |

As will be apparent from Table V, the kinematic viscosity of the oil containing the polymer of Example 6 was, generally, slightly lower than the kinematic viscosity of both oils containing commercially available VI improvers at 40°C. At 100°C, the kinematic viscosity of the oils were approximately equal. Between temperatures of 110°C and 150°C the kinematic viscosity of the oil containing the polymer of Example 6 was above that of both of the oils containing commercially available VI improvers.

17

EP 0 425 027 B1

Claims
Claims for the following Contracting States : BE, CH, DE, FR, GB, IT, LI, NL, SE

1. A star-shaped polymer comprising a plurality of arms of a block copolymer containing a single monoalkenyl aromatic hydrocarbon block and a single conjugated diolefin block having hydrogenated conjugated diene monomer units and a poly(polyalkenyl coupling agent) nucleus, said polymer containing from 6 to 13 total arms as determined by gel permeation chromatography using monoalkenyl aromatic equivalent molecular weights, the monoalkenyl aromatic equivalent peak molecular weight of the monoalkenyl aromatic hydrocarbon polymer block being within the range from 7,000 to 80,000 and the peak molecular weight of the conjugated diolefin block being within the range from 20,000 to 105,000 with the proviso that the weight ratio fo monoalkenyl aromatic hydrocarbon to conjugated diolefin in the polymer be within the range from 0.05:1 to 1.5:1.

2. A polymer according to Claim 1 wherein the monoalkenyl aromatic hydrocarbon is styrene.

3. A polymer according to 1 or Claim 2 wherein the conjugated diene is isoprene.

4. A polymer according to Claim 1 wherein the monoalkenyl aromatic hydrocarbon is styrene, the conjugated diene is isoprene and the number of arms is in the range from 7 to 9 with the styrene equivalent peak molecular weight of the styrene polymer block being within the range from 7,000 to 80,000 and the peak molecular weight of the isoprene polymer block is within the range from 20,000 to 105,000.

5. A polymer according to Claim 4 wherein the weight ratio of styrene to isoprene in the polymer is in the range from 0.1:1 to 1.1:1.

6. A star-shaped polymer according to any one of Claims 1 to 5 wherein at least 98% of ethylenic unsaturation originally in the conjugated diolefin blocks is hydrogenated.

7. A process for preparing a star-shaped polymer according to any one of Claims 1 to 6 comprising the following steps:-
   (a) preparing block copolymer arms containing a polymeric monoalkenyl aromatic hydrocarbon block comprising monomeric units of one or more monoalkenyl aromatic hydrocarbon monomers and a polymeric conjugated diolefin block comprising monomeric units of one or more hydrogenated conjugated dienes by first polymerizing the conjugated diolefin monomer or monomers in solution and in the presence of an anionic initiator containing a single alkali metal atom and then adding the monoalkenyl aromatic hydrocarbon monomer or monomers and completing the polymerization to produce a living block copolymer having alkali metal atoms at the end of a monoalkenyl aromatic hydrocarbon block;
   (b) reacting the living polymer from step (a) with a polyalkenyl coupling agent to form a star-shaped polymer; and
   (c) selectively hydrogenating the star-shaped polymer thus formed to form a selectively hydrogenated star-shaped polymer containing hydrogenated conjugated diolefin monomer units.

8. A lubricating oil composition comprising a major proportion of a lubricating oil and a minor proportion of a star-shaped polymer according to any one of Claims 1 to 6.

9. A composition according to Claim 8 wherein the concentration of the star-shaped polymer is within the range from 0.1 to 5.0 wt % based on polymer plus oil.

Claims for the following Contracting State : ES

1. A process for the preparation of a star-shaped polymer comprising a plurality of arms of a block copolymer containing a single monoalkenyl aromatic hydrocarbon block and a single conjugated diolefin block having hydrogenated conjugated diene monomer units and a poly(polyalkenyl coupling agent) nucleus, said polymer containing from 6 to 13 total arms as determined by gel permeation chromatography using monoalkenyl aromatic equivalent molecular weights, the monoalkenyl aromatic equivalent peak molecular weight of the monoalkenyl aromatic hydrocarbon polymer block being within

18

EP 0 425 027 B1

the range from 7,000 to 80,000 and the peak molecular weight of the conjugated diolefin block being within the range from 20,000 to 105,000 with the proviso that the weight ratio of monoalkenyl aromatic hydrocarbon to conjugated diolefin in the polymer be within the range from 0.05:1 to 1.5:1, the process comprising the following steps:

(a) preparing block copolymer arms containing a polymeric monoalkenyl aromatic hydrocarbon block comprising monomeric units of one or more monoalkenyl aromatic hydrocarbon monomers and a polymeric conjugated diolefin block comprising monomeric units of one or more hydrogenated conjugated dienes by first polymerizing the conjugated diolefin monomer or monomers in solution and in the presence of an anionic initiator containing a single alkali metal atom and then adding the monoalkenyl aromatic hydrocarbon monomer or monomers and completing the polymerization to produce a living block copolymer having alkali metal atoms at the end of a monoalkenyl aromatic hydrocarbon block;

(b) reacting the living polymer from step (a) with a polyalkenyl coupling agent to form a star-shaped polymer; and

(c) selectively hydrogenating the star-shaped polymer thus formed to form a selectively hydrogenated star-shaped polymer containing hydrogenated conjugated diolefin monomer units.

2. A process according to Claim 1 wherein the monoalkenyl aromatic hydrocarbon is styrene.

3. A process according to Claim 1 or 2 wherein the conjugated diene is isoprene.

4. A process according to Claim 1 wherein the monoalkenyl aromatic hydrocarbon is styrene, the conjugated diene is isoprene and the number of arms is in the range from 7 to 9 with the styrene equivalent peak molecular weight of the styrene polymer block being within the range from 7,000 to 80,000 and the peak molecular weight of the isoprene polymer block is within the range from 20,000 to 105,000.

5. A process according to Claim 4 wherein the weight ratio of styrene to isoprene in the polymer is in the range from 0.1:1 to 1.1:1.

6. A process according to any one of Claims 1 to 5 wherein at least 98% of ethylenic unsaturation originally in the conjugated diolefin blocks is hydrogenated.

7. A process for the preparation of a lubricating oil composition which comprises mixing a major proportion of a lubricating oil and a minor proportion of a star-shaped polymer prepared by a process according to any one of the preceding Claims.

8. A process according to Claim 7 wherein the concentration of the star-shaped polymer is within the range from 0.1 to 5.0 wt % based on polymer plus oil.

**Patentansprüche**

**Patentansprüche für folgende Vertragsstaaten : BE, CH, DE, FR, GB, IT, LI, NL, SE**

1. Ein sternförmiges Polymer, umfassend eine Mehrzahl von Armen aus einem Blockcopolymer, welches einen einzelnen Block aus einem monoalkenylaromatischen Kohlenwasserstoff und einen einzigen Block aus einem konjugierten Diolefin enthält, wobei letzterer hydrierte Monomereinheiten des konjugierten Diens aufweist, und umfassend einen Kern aus einem Poly(polyalkenylkupplungsmittel), wobei besagtes Polymer 6 bis 13 Gesamtarme aufweist, bestimmt mittels Gelpermeationschromatographie unter Verwendung von monoalkenylaromatischen Äquivalent-Molekulargewichten, und der Peak-Wert des monoalkenylaromatischen Äquivalent-Molekulargewichts des Polymerblocks aus einem monoalkenylaromatischen Kohlenwasserstoff im Bereich von 7000 bis 80000 liegt, während der Peak-Wert des Molekulargewichts des Blockes aus dem konjugierten Diolefin im Bereich von 20000 bis 105000 liegt, mit der Maßgabe, daß das Gewichtsverhältnis von monoalkenylaromatischem Kohlenwasserstoff zum konjugierten Diolefin im Polymer im Bereich von 0,05:1 bis 1,5:1 liegt.

2. Ein Polymer gemäß Anspruch 1, in welchem der monoalkenylaromatische Kohlenwasserstoff Styrol ist.

3. Ein Polymer gemäß Anspruch 1 oder 2, in welchem das konjugierte Dien Isopren ist.

19

**4.** Ein Polymer gemäß Anspruch 1, in welchem der monoalkenylaromatische Kohlenwasserstoff Styrol und das konjugierte Dien Isopren ist und in welchem die Anzahl von Armen im Bereich von 7 bis 9 liegt, wobei der Peak-Wert des Styrol-Äquivalent-Molekulargewichts des Styrolpolymerblocks im Bereich von 7000 bis 80000 und der Peak-Wert des Molekulargewichts des Isoprenpolymerblocks im Bereich von 20000 bis 105000 liegt.

**5.** Ein Polymer gemäß Anspruch 4, in welchem das Gewichtsverhältnis von Styrol zu Isopren in dem Polymer im Bereich von 0,1:1 bis 1,1:1 liegt.

**6.** Ein sternförmiges Polymer gemäß irgendeinem der Ansprüche 1 bis 5, in welchem mindestens 98 % der ursprünglich in den Blöcken aus konjugiertem Diolefin vorhandenen ethylenischen Ungesättigtheit hydriert worden sind.

**7.** Ein Verfahren zur Herstellung eines sternförmigen Polymers gemäß irgendeinem der Ansprüche 1 bis 6, umfassend die nachstehenden Schritte:
(a) Herstellung von Blockcopolymerarmen, enthaltend einen polymeren Block aus monoalkenylaromatischem Kohlenwasserstoff, der monomere Einheiten von einem oder mehreren monoalkenylaromatischen Kohlenwasserstoff(en) umfaßt, und enthaltend einen Polymerblock aus konjugiertem Diolefin, der monomere Einheiten von einem oder mehreren hydrierten konjugierten Diolefin(en) umfaßt, wobei zuerst das (die) Monomer(e) von konjugiertem Diolefin in Lösung polymerisiert wird (werden), und zwar in Anwesenheit eines anionischen Initiators, der ein einziges Alkalimetallatom enthält, und dann das oder die Monomer(e) von monoalkenylatomatischem Kohlenwasserstoff zugesetzt wird (werden) und die Polymerisationsreaktion unter Bildung eines Living-Blockcopolymers zu Ende geführt wird, wobei letzteres Alkalimetallatome am Ende eines Blocks eines monoalkenylaromatischen Kohlenwasserstoffs aufweist;
(b) weitere Reaktion des in Stufe (a) erhaltenen Living-Polymers mit einem Polyalkenylkupplungsmittel unter Bildung eines sternförmigen Polymers; und
(c) selektive Hydrierung des so erhaltenen sternförmigen Polymers unter Bildung eines selektiv hydrierten sternförmigen Polymers, welches Monomereinheiten aus hydriertem konjugierten Diolefin enthält.

**8.** Eine Schmierölzusammensetzung, umfassend einen größeren Anteil eines Schmieröls und einen kleineren Anteil eines sternförmigen Polymers gemäß irgendeinem der Ansprüche 1 bis 6.

**9.** Eine Zusammensetzung nach Anspruch 8, in der die Konzentration an sternförmigem Polymer im Bereich von 0,1 bis 5,0 Gew.% liegt, bezogen auf die Summe von Polymer und Öl.

**Patentansprüche für folgenden Vertragsstaat : ES**

**1.** Ein Verfahren zur Herstellung eines sternförmigen Polymers, umfassend eine Mehrzahl von Armen aus einem Blockcopolymer, welches einen einzelnen Block aus einem monoalkenylaromatischen Kohlenwasserstoff und einen einzigen Block aus einem konjugierten Diolefin enthält, wobei letzterer hydrierte Monomereinheiten des konjugierten Diens aufweist, und umfassend einen Kern aus einem Poly-(polyalkenylkupplungsmittel), wobei besagtes Polymer 6 bis 13 Gesamtarme aufweist, bestimmt mittels Gelpermeationschromatographie unter Verwendung von monoalkenylaromatischen Äquivalent-Molekulargewichten, und der Peak-Wert des monoalkenylaromatischen Äquivalent-Molekulargewichts des Polymerblocks aus einem monoalkenylaromatischen Kohlenwasserstoff im Bereich von 7000 bis 80000 liegt, während der Peak-Wert des Molekulargewichts des Blocks aus dem konjugierten Diolefin im Bereich von 20000 bis 105000 liegt, mit der Maßgabe, daß das Gewichtsverhältnis von monoalkenylaromatischem Kohlenwasserstoff zum konjugierten Diolefin im Polymer im Bereich von 0,05:1 bis 1,5:1 liegt, umfassend die nachstehenden Schritte:
(a) Herstellung von Blockcopolymerarmen, enthaltend einen polymeren Block aus monoalkenylaromatischem Kohlenwasserstoff, der monomere Einheiten von einem oder mehreren monoalkenylaromatischen Kohlenwasserstoff(en) umfaßt, und enthaltend einen Polymerblock aus konjugiertem Diolefin, der monomere Einheiten von einem oder mehreren hydrierten konjugierten Diolefin(en) umfaßt, wobei zuerst das (die) Monomer(e) von konjugiertem Diolefin in Lösung polymerisiert wird (werden), und zwar in Anwesenheit eines anionischen Initiators, der ein einziges Alkalimetallatom enthält, und dann das oder die Monomer(e) von monoalkenylatomatischem Kohlenwasserstoff zugesetzt wird (werden) und die Polymerisationsreaktion unter Bildung eines Living-Blockcopolymers zu Ende geführt wird, wobei letzteres Alkalimetallatome am Ende eines Blocks eines monoalkenylaromatischen Kohlenwasserstoffs aufweist;

(b) weitere Reaktion des in Stufe (a) erhaltenen Living-Polymers mit einem Polyalkenylkupplungsmittel unter Bildung eines sternförmigen Polymers; und

(c) selektive Hydrierung des so erhaltenen sternförmigen Polymers unter Bildung eines selektiv hydrierten sternförmigen Polymers, welches Monomereinheiten aus hydriertem konjugierten Diolefin enthält.

2. Verfahren nach Anspruch 1, in welchem der monoalkenylaromatische Kohlenwasserstoff Styrol ist.

3. Verfahren nach Anspruch 1 und 2, dadurch gekennzeichnet, daß das konjugierte Dien Isopren ist.

4. Ein Verfahren nach Anspruch 1, in welchem der monoalkenylaromatische Kohlenwasserstoff Styrol und das konjugierte Dien Isopren ist und in welchem die Anzahl von Armen im Bereich von 7 bis 9 liegt, wobei der Peak-Wert des Styrol-Äquivalent-Molekulargewichts des Styrolpolymerblocks im Bereich von 7000 bis 80000 und der Peak-Wert des Molekulargewichts des Isoprenpolymerblocks im Bereich von 20000 bis 105000 liegt.

5. Ein Verfahren nach Anspruch 4, in welchem das Gewichtsverhältnis von Styrol zu Isopren in dem Polymer im Bereich von 0,1:1 bis 1,1:1 liegt.

6. Ein Verfahren gemäß einem der Ansprüche 1 bis 5, in welchem mindestens 98 % der ursprünglich in den Blöcken aus konjugiertem Diolefin vorhandenen ethylenischen Ungesättigtheit hydriert worden sind.

7. Ein Verfahren zur Herstellung einer Schmierölzusammensetzung, welches das Vermischen eine größeren Anteils eines Schmieröls mit einem kleineren Anteil eines sternförmigen Polymers, hergestellt nach irgendeinem der vorstehenden Ansprüche, umfaßt.

8. Ein Verfahren nach Anspruch 7, in welchem die Konzentration des sternförmigen Polymers im Bereich von 0,1 bis 5,0 Gew.% liegt, bezogen auf die Summe von Polymer und Öl.

**Revendications**

**Revendications pour les Etats contractants suivants : BE, CH, DE, FR, GB, IT, LI, NL, SE**

1. Un polymère en étoile comportant une pluralité de bras d'un copolymère séquencé renfermant une séquence unique hydrocarbure aromatique monoalcénylé et une séquence unique dioléfinique conjuguée, ayant des motifs monomère diène conjugué hydrogéné et un noyau poly(agent couplant polyalcénylé) ledit polymère renfermant de 6 à 13 bras au total comme déterminé par chromatographie de perméation sur gel en utilisant des poids moléculaires équivalents de composé aromatique monoalcénylé, le poids moléculaire maximal équivalent de produit aromatique monoalcénylé de la séquence polymère hydrocarbure aromatique monoalcénylé se situant dans la gamme de 7 000 à 80 000, et le poids moléculaire maximal de la séquence dioléfinique conjuguée se situant dans la gamme de 20 000 à 105 000, sous la condition que le rapport pondéral de l'hydrocarbure aromatique monoalcénylé à la dioléfine conjuguée dans le polymère se situe dans la gamme de 0,05:1 à 1,5:1.

2. Un polymère selon la revendication 1, dans lequel l'hydrocarbure aromatique monoalcénylé est le styrène.

3. Un polymère selon la revendication 1 ou la revendication 2, dans lequel le diène conjugué est l'isoprène.

4. Un polymère selon la revendication 1, dans lequel l'hydrocarbure aromatique monoalcénylé est le styrène, le diène conjugué est l'isoprène et le nombre de bras se situe dans la gamme de 7 à 9, le poids moléculaire maximum équivalent en styrène de la séquence polymère styrène se situant dans la gamme de 7 000 à 80 000, tandis que le poids moléculaire maximum de la séquence polymère isoprène se situe dans la gamme de 20 000 à 105 000.

5. Un polymère selon la revendication 4, dans lequel le rapport pondéral du styrène à l'isoprène dans le polymère se situe dans la gamme de 0,1:1 à 1,1:1.

6. Un polymère en étoile selon l'une quelconque des revendications 1 à 5, dans lequel au moins 98% de l'insaturation éthylénique à l'origine dans les séquences dioléfiniques conjuguées sont hydrogénés.

7. Un procédé pour préparer un polymère en étoile selon l'une quelconque des revendications 1 à 6, comportant les étapes suivantes :

(a) la préparation de bras de copolymère séquencé renfermant une séquence polymère hydrocarbure aromatique monoalcénylé, qui comporte des motifs monomère d'un ou de plus d'un monomère de type hydrocarbure aromatique monoalcénylé et une séquence polymère dioléfinique conjugué, qui comporte des motifs monomère d'un ou de plus d'un diène conjugué hydrogéné, en réalisant d'abord la polymérisation du monomère ou des monomères dioléfiniques conjugués en solution en présence d'un initiateur renfermant un atome de métal alcalin unique et en ajoutant le monomère ou les monomères de type hydrocarbure aromatique monoalcénylé après quoi la polymérisation est amenée à terme afin d'obtenir un copolymère séquencé actif présentant des atomes de métal alcalin à l'extrémité d'une séquence hydrocarbure aromatique monoalcénylée;

(b) la réaction du polymère actif obtenu à l'étape (a) avec un agent de couplage polyalcénylé afin de former un polymère en étoile; et

(c) l'hydrogénation sélective du polymère en étoile ainsi formé afin d'obtenir un polymère en étoile sélectivement hydrogéné, qui renferme des motifs monomère dioléfiniques conjugués hydrogénés.

8. Une composition d'huile lubrifiante comportant une proportion prépondérante d'une huile lubrifiante et une proportion plus faible d'un polymère en étoile selon l'une quelconque des revendications 1 à 6.

9. Une composition selon la revendication 8, dans laquelle la concentration du polymère en étoile se situe dans la gamme de 0,1 à 5,0% en poids en se basant sur le polymère plus l'huile.

**Revendications pour l'Etat contractant suivant : ES**

1. Un procédé pour la préparation d'un polymère en étoile comportant une pluralité de bras d'un copolymère séquencé renfermant une séquence unique hydrocarbure aromatique monoalcénylé et une séquence unique dioléfinique conjuguée, ayant des motifs monomère diène conjugué hydrogéné et un noyau poly(agent couplant polyalcénylé) ledit polymère renfermant de 6 à 13 bras au total comme déterminé par chromatographie de perméation sur gel en utilisant des poids moléculaires équivalents de composé aromatique monoalcénylé, le poids moléculaire maximal équivalent de produit aromatique monoalcénylé de la séquence polymère hydrocarbure aromatique monoalcénylé se situant dans la gamme de 7 000 à 80 000, et le poids moléculaire maximal de la séquence dioléfinique conjuguée se situant dans la gamme de 20 000 à 105 000, sous la condition que le rapport pondéral de l'hydrocarbure aromatique monoalcénylé à la dioléfine conjuguée dans le polymère se situe dans la gamme de 0,05:1 à 1,5:1, ce procédé comportant les étapes suivantes :

(a) la préparation de bras de copolymère séquencé renfermant une séquence polymère hydrocarbure aromatique monoalcénylé, qui comporte des motifs monomère d'un ou de plus d'un monomère de type hydrocarbure aromatique monoalcénylé et une séquence polymère dioléfinique conjugué, qui comporte des motifs monomère d'un ou de plus d'un diène conjugué hydrogéné, en réalisant d'abord la polymérisation du monomère ou des monomères dioléfiniques conjugués en solution en présence d'un initiateur renfermant un atome de métal alcalin unique et en ajoutant le monomère ou les monomères de type hydrocarbure aromatique monoalcénylé après quoi la polymérisation est amenée à terme afin d'obtenir un copolymère séquencé actif présentant des atomes de métal alcalin à l'extrémité d'une séquence hydrocarbure aromatique monoalcénylée;

(b) la réaction du polymère actif obtenu à l'étape (a) avec un agent de couplage polyalcénylé afin de former un polymère en étoile; et

(c) l'hydrogénation sélective du polymère en étoile ainsi formé afin d'obtenir un polymère en étoile sélectivement hydrogéné, qui renferme des motifs monomère dioléfiniques conjugués hydrogénés.

2. Un procédé selon la revendication 1, dans lequel l'hydrocarbure aromatique monoalcénylé est le styrène.

3. Un procédé selon selon la revendication 1 ou la revendication 2, dans lequel le diène conjugué est l'isoprène.

4. Un procédé selon la revendication 1, dans lequel l'hydrocarbure aromatique monoalcénylé est le styrène, le diène conjugué et l'isoprène et le nombre de bras se situe dans la gamme de 7 à 9, le poids moléculaire maximum équivalent en styrène de la séquence polymère styrène se situant dans la gamme de 7 000 à 80 000, tandis que le poids moléculaire maximum de la séquence polymère isoprène se situe dans la gamme de 20 000 à 105 000.

5. Un procédé selon la revendication 4, dans lequel le rapport pondéral du styrène à l'isoprène dans le polymère se situe dans la gamme de 0,1:1 à 1,1:1.

6. Un procédé selon l'une quelconque des revendications 1 à 5, dans lequel au moins 98% de l'insaturation éthylénique à l'origine dans les séquences dioléfiniques conjuguées sont hydrogénés.

7. Un procédé pour la préparation d'une composition d'huile lubrifiante, procédé selon lequel on mélange une proportion prépondérante d'une huile lubrifiante et une proportion plus faible d'un polymère en étoile qui est préparé par un procédé selon l'une quelconque des revendications précédentes.

8. Un procédé selon la revendication 7, dans laquelle la concentration du polymère en étoile se situe dans la gamme de 0,1 à 5,0% en poids en se basant sur le polymère plus l'huile.